(19)

Europäisches Patentamt
European Patent Office
Office européen des brevets

(11) **EP 4 513 226 A1**

(12) **EUROPEAN PATENT APPLICATION**

(43) Date of publication:
**26.02.2025 Bulletin 2025/09**

(21) Application number: **24194289.5**

(22) Date of filing: **13.08.2024**

(51) International Patent Classification (IPC):
**G01S 7/41** (2006.01)    **G01S 7/48** (2006.01)
**G01S 13/86** (2006.01)    **G01S 13/931** (2020.01)
**G06V 20/58** (2022.01)

(52) Cooperative Patent Classification (CPC):
**G01S 7/417; G01S 13/867; G01S 13/931;**
**G06V 20/56; G06V 20/58;** G01S 7/4802;
G01S 13/865; G01S 17/86; G01S 17/931;
G01S 2013/9323

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **25.08.2023   US 202318238004**

(71) Applicant: **NXP B.V.**
**5656 AG Eindhoven (NL)**

(72) Inventors:
- **Alkanat, Tunc**
  **5656AG Eindhoven (NL)**
- **Pandharipande, Ashish**
  **5656AG Eindhoven (NL)**

(74) Representative: **Miles, John Richard**
**NXP SEMICONDUCTORS**
**Intellectual Property Group**
**Abbey House**
**25 Clarendon Road**
**Redhill, Surrey RH1 1QZ (GB)**

(54) **SENSOR POINT CLOUD PROBABILITY DENSITY FUNCTION ESTIMATION BASED ON VISION SENSOR DATA**

(57)    Techniques for using machine learning to produce sensor data from vision sensor data are disclosed. By using a limited amount of sensor data together with vision sensor data, a deep learning network can be trained to produce estimated sensor point cloud distributions from, e.g., vision sensor data alone. Using a deep learning network trained in this way, vehicles with limited or no other sensor functionality can be equipped with a camera to produce estimated sensor point cloud distributions. The estimated sensor point cloud distributions can then be used to improve vehicle safety through vehicle controls or driver notifications and/or to produce enhanced sensor data.

FIG. 3

**Description**

BACKGROUND

Radar data is often used to improve vehicle safety. For example, radar-based object avoidance and collision avoidance are often utilized in vehicles in order to notify drivers of nearby objects, such when the driver is parking a vehicle, or even to automatically apply a vehicle's brakes when an impending collision is detected. However, radar sensors are often expensive and radar data can be inaccurate, and so it is desirable to use machine learning techniques to, e.g., minimize the number of sensors required for a given application and/or to improve radar data derived from those sensors. One point of difficulty in utilizing machine learning to improve radar data is that machine learning techniques typically require a large amount of training data, which can be difficult to obtain, in order to train deep learning networks to be useful for improving radar data or related systems. Accordingly, it is desirable to identify practical ways to leverage machine learning to improve radar data or related systems.

BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.

FIG. 1 is a block diagram of a method of training a deep learning network to produce an estimated sensor point cloud distribution based on vision sensor data in accordance with some embodiments.

FIG. 2 is a representation of a photographic image alongside a corresponding estimated sensor point cloud distribution with overlaid training data.

FIG. 3 is a block diagram of a method of producing an estimated sensor point cloud distribution based on vision sensor data in accordance with some embodiments.

FIG. 4 is a block diagram of a method of producing an estimated sensor point cloud distribution based on vision sensor data and other sensor data in accordance with some embodiments.

FIG. 5 is a block diagram of a method of producing and using an estimated sensor point cloud distribution based on vision sensor data in accordance with some embodiments.

DETAILED DESCRIPTION

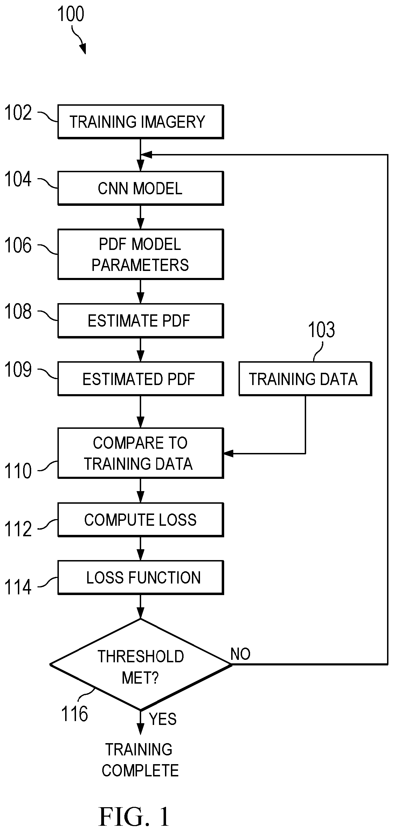

FIGS. 1-5 illustrate techniques for using machine learning to produce sensor data from vision sensor data. As noted above, machine learning techniques typically require a large amount of well-labeled training data, which can be difficult to obtain, in order to train deep learning networks to be useful for improving sensor data or related systems. Although large amounts of well-labeled training data are not typically readily available for, e.g., radar applications, large amounts of well-labeled training data are available for, e.g., vision sensor data of roads. By using a limited amount of sensor data, such as radar and/or light detection and ranging (LiDAR) data, together with such vision sensor data, a deep learning network can be trained to produce estimated sensor point cloud distributions (i.e., from vision sensor data alone). Generally, a sensor point cloud distribution refers to a collection of data points typically generated using a sensor, such as a radar or LiDAR sensor, where each point represents a detected object's position in three-dimensional space, often along with additional attributes such as velocity or cross-section. Using a deep learning network trained in this way, vehicles with limited or no radar or other sensor functionality can be equipped with a vision sensor to produce estimated sensor point cloud distributions (i.e., an estimated distribution of points of interest that should be detectable using a sensor such as a radar or LiDAR sensor). These estimated sensor point cloud distributions can then be used to improve vehicle safety through vehicle controls or driver notifications and/or to produce enhanced sensor data.

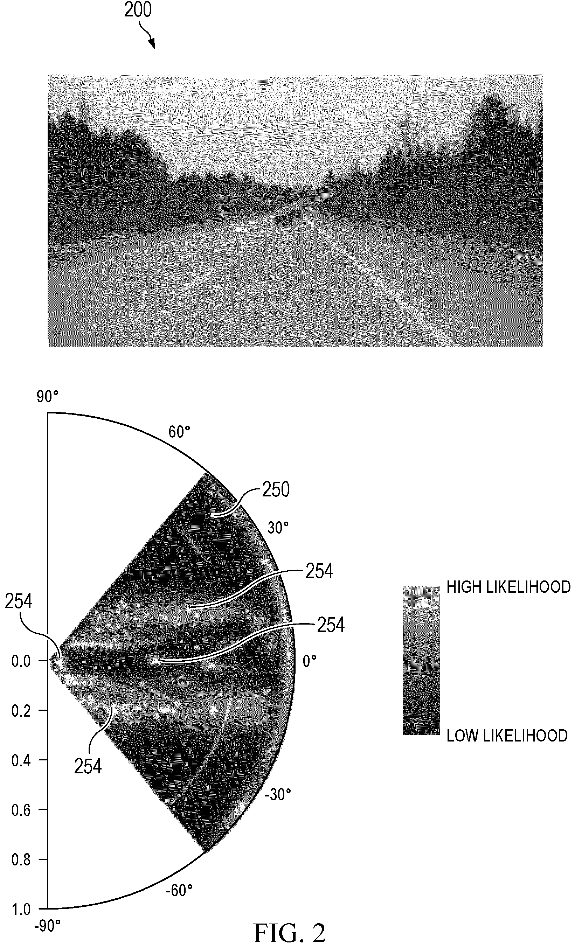

FIG. 1 illustrates a method 100 of training a deep learning network to produce an estimated sensor point cloud distribution based on vision sensor data in accordance with some embodiments. In order to provide a clear explanation of various features of the method 100, FIG. 1 is discussed in connection with FIG. 2, which provides a representation of one or more photographic image 200, which may include one or more camera images, alongside a corresponding estimated sensor point cloud distribution 250 with overlaid training data 254. In order to produce an estimated sensor point cloud distribution based on vision sensor data using a deep learning network, in some embodiments, the deep learning network is first trained using labeled training imagery 102 (see, e.g., the photographic image 200 of FIG. 2) and other training data 103, which may include sensor data such as a ground truth point cloud (e.g., a low-resolution known distribution of points of interest that are detected using a sensor such as a radar or LiDAR sensor) corresponding to (e.g., co-centered with) the training imagery 102 (see, e.g., the training data 254 of FIG. 2).

In the example of FIG. 1, the training imagery 102 is provided as an input to a deep learning network, in this case a convolutional neural network (CNN) model 104, although it is noted that other types of deep learning networks can be used in place of or in addition to a CNN model, such as a Multi-Layer Perceptron model or a Recurrent Neural Network model, among others. The CNN model 104 processes the training imagery 102 (see, e.g., the photographic image 200 of FIG. 2) to produce one or more probability density function (PDF) parameters 106 (e.g., Gaussian mixture model parameters or other statistical modeling parameters, such as mean, variance, and weight parameters), which are then used (e.g., in a Gaussian mixture model or other statistical model) to estimate a PDF 108, thus producing an estimated PDF 109 (see, e.g., the estimated sensor point cloud distribution 250 of FIG. 2) corresponding to the training imagery 102. In some embodiments, the other training data 103 includes point clouds at a first resolution, and the estimated sensor point cloud distribution 250 has a second resolution higher than the first resolution.

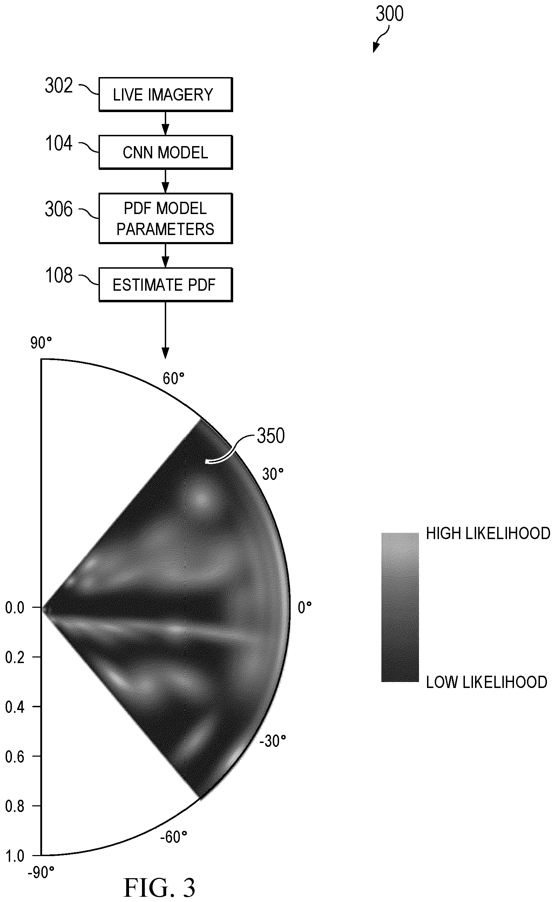

Generally, a PDF is a function whose value at any given sample (or point) in the sample space (the set of possible values taken by a random variable) can be interpreted as providing a relative likelihood that the value of the random variable would be equal to that sample. Accordingly, the value of a PDF at two different samples can be used to infer, in any particular draw of the random variable, how much more likely it is that the random variable would be close to one sample compared to the other sample. The estimated PDF 109 should (after sufficient training of the deep learning network) include higher likelihood values in regions where sensor points are likely to be found and lower likelihood values otherwise. Notably, in this example, the estimated PDF 109 provides estimated regions of high and low likelihood of sensor points derived from the training imagery 102 but does not include the training data 254 shown in FIG. 2. For clarity, another example of an estimated sensor point cloud distribution without overlaid training data is shown in the estimated sensor point cloud distribution 350 of FIG. 3.

As can be seen in FIG. 2 by comparing the high likelihood regions in the estimated sensor point cloud distribution 250 (corresponding to an estimated PDF 109) with locations of the training data 254, after training is complete, the PDF 109 can be used to closely predict the locations of the training data 254 using only vision sensor data. However, before this level of accuracy can be achieved, in some embodiments, the deep learning network is first trained by comparing the estimated PDF 109 to the other training data 103 and modifying the CNN model 104 to maximize the likelihood of the other training data 103 (e.g., the training data 254 of FIG. 2) in the estimated PDF 109 (e.g., the estimated sensor point cloud distribution 250 of FIG. 2).

In the example of FIG. 1, the estimated PDF 109 is compared 110 with the other training data 103 to compute a conditional probability (a type of probability that results from updating a prior probability with information summarized by the likelihood via an application of Bayes' rule), after which a loss function 112 is used to compute a loss function 114, which gauges a difference between the PDF 109 and the other training data 103 and maximizes a posteriori probability of the other training data to the estimated sensor point cloud distribution (e.g., PDF 109). After computing the loss function 114, the loss function 114 is compared to a threshold 116, which may be predetermined or dynamically controlled. In other embodiments, rather than comparing the loss function 114 to a threshold 116, the threshold 116 controls a number of iterations, allowing training to be limited to a predetermined number of iterations. In some embodiments, a sensor point cloud is generated from the estimated sensor point cloud distribution as a realization with likelihood values that exceed a threshold. Such embodiments may include comparing the estimated sensor point cloud distribution with the other training data corresponding to the vision sensor training data to obtain a loss function, generating a sensor point cloud from the estimated sensor point cloud distribution as a realization, and comparing likelihood values in the sensor point cloud with a predetermined threshold to determine whether training of the deep learning network is complete.

The CNN model 104 is updated based on the loss function, and when the threshold 116 is met, the method 100 of training of the CNN model 104 is complete. However, if the threshold 116 is not met or further training is otherwise desired, the method 100 provides the same or different training imagery 102 to the CNN model 104 and the training process is repeated, with each iteration aiming to further minimize any differences between regions of high likelihood in the estimated PDF 109 (e.g., the estimated sensor point cloud distribution 250 of FIG. 2) and the other training data 103 (e.g., the training data 254 of FIG. 2 or different training data corresponding to different training imagery).

Notably, the training imagery 102 may be prerecorded imagery or live imagery recorded by an on-board vehicle system, which may include one or more sensors (e.g., photographic, radar, etc.). Similarly, the other training data 103, which may include the training data 254 shown in FIG. 2, may be prerecorded or live sensor data recorded by an on-board vehicle system. In some embodiments, the other training data 103 and/or estimated PDF 109 include 2-4 dimensions, such as range, azimuth, elevation, and Doppler (i.e., relative speed) information. In some embodiments, an estimated sensor point cloud distribution such as the estimated sensor point cloud distribution 250 of FIG. 2 is a radar point cloud distribution including estimated radar points having range, azimuth, elevation, and Doppler information, and the other training data 103 includes radar points having range and azimuth information.

In some embodiments, the estimated PDF 109 is generated using a parametric Gaussian mixture model (GMM), as shown in Equation 1, where K represents the number of components in the GMM, $\mathcal{N}$ represents each Gaussian, and $p(\vec{x})$ is the resulting point cloud PDF. Parameters $\vec{\mu}_i$ and $\Sigma_i$, which are vectors and matrices, respectively, can include from 2-4 dimensions, while $\phi_i$ is a weighting parameter for each Gaussian $\mathcal{N}$.

$$p(\vec{x}) = \sum_{i=1}^{K} \phi_i \mathcal{N}(\vec{x}|\vec{\mu}_i, \Sigma_i) \tag{1}$$

Due to the definition of the Gaussian mixture model, in some embodiments, Equation 2 must be satisfied, forcing the weighting parameters $\phi_i$ for each Gaussian $\mathcal{N}$ to sum to 1.

$$\sum_{i=1}^{K} \phi_i = 1 \tag{2}$$

The Gaussians $\mathcal{N}$ are defined by Equation 3.

$$\mathcal{N}(\vec{x}|\vec{\mu}_i, \Sigma_i) = \frac{1}{\sqrt{(2\pi)^K |\Sigma_i|}} \exp\left(-\frac{1}{2}(\vec{x} - \vec{\mu}_i)^T \Sigma_i^{-1}(\vec{x} - \vec{\mu}_i)\right) \tag{3}$$

In some embodiments, the loss function 114 is computed using Equation 4, where L is the loss, N represents the number of points in the point cloud $\vec{x}$, $\theta$ represents GMM parameters as determined by the deep learning network (e.g., CNN model 104), and $\alpha$ is a tuning parameter usable to tune properties of the PDF $p$ (e.g., to provide a sharpening effect). By using a loss function similar to the one presented in Equation 4, a deep learning network can be trained to provide a maximized likelihood in a region of an estimated PDF or estimated sensor point cloud distribution wherever a training sensor point is located.

$$L(\vec{x}; \theta) = \sum_{n=1}^{N} \max(\alpha - p(\vec{x}[n]; \theta), 0) \tag{4}$$

FIG. 3 illustrates a method 300 of producing an estimated sensor point cloud distribution based on vision sensor data in accordance with some embodiments. Similar to the training example of FIG. 1 but with the training steps omitted, as can be seen in FIG. 3, rather than the training imagery 102, live imagery 302 is provided as an input to a trained deep learning network, in this case the CNN model 104 trained using the training method 100 of FIG. 1. The CNN model 104 processes the live imagery 302 (similar to the photographic image 200 of FIG. 2, although the live imagery 302 can include still images and/or videos or sets of images) to produce one or more PDF parameters 306, which are then used (e.g., in a Gaussian mixture model or other statistical model) to estimate a PDF 108, which can be used to generate an estimated sensor point cloud distribution 350 corresponding to the live imagery 302 by inference, e.g., with high- or super-resolution, without requiring any sensor data to be provided corresponding to the live imagery 302.

While the method 100 of FIG. 1 may be performed by a training system separate from any vehicle or in an on-board vehicle system, the method 300 and other methods described hereinbelow for generating estimated sensor point cloud distributions may be performed partially or completely by an on-board vehicle system. However, in some embodiments, some portions of the methods may be performed by external (e.g., cloud or server-based) computing systems. For example, in some embodiments, live imagery 302 is obtained using an on-board vehicle system while analysis of the live imagery 302 by the CNN model 104, generation of the PDF model parameters 306, estimating the PDF 108, and/or generating the estimated sensor point cloud distribution 350 are performed by external computing systems in communication (e.g., WiFi or cellular) with the on-board vehicle system.

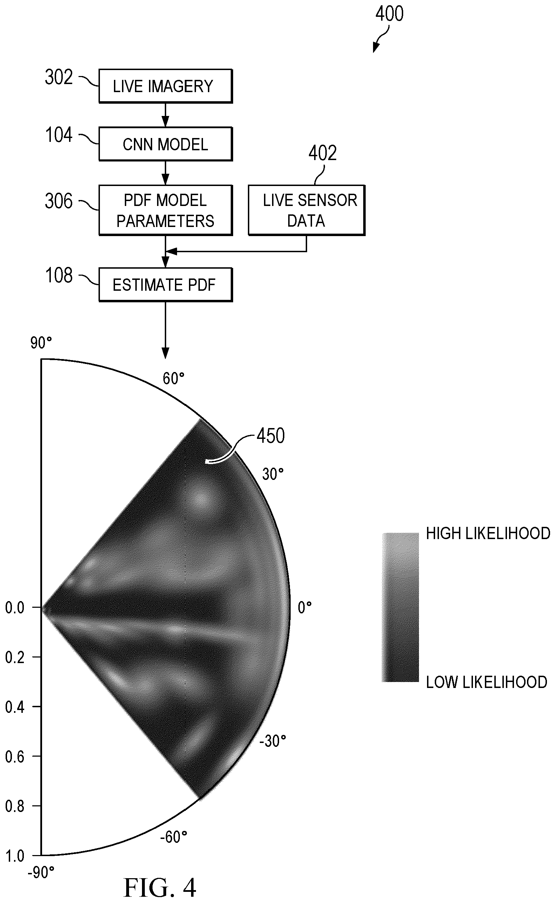

FIG. 4 illustrates a method 400 of producing an estimated sensor point cloud distribution based on vision sensor data and other sensor data in accordance with some embodiments. As shown in FIG. 4, the method 400 is identical to the method 300 with the exception of live sensor data 402. In the example of method 400, when live sensor data 402 corresponding to the live imagery 302 is available, estimating the PDF 108 can include consideration of the live sensor data 402. Thus, rather than generating a PDF producing an estimated sensor point cloud distribution 450 based only on analysis of the live imagery 302 as in method 300, in method 400, the estimated PDF and/or estimated sensor point cloud distribution 450 is created or modified based on the live sensor data 402 in addition to the live imagery 302.

For example, in some embodiments, a correlation between the live sensor data 402 and the estimated PDF or the estimated sensor point cloud distribution 450 is determined and the estimated PDF or estimated sensor point cloud distribution 450 is created or modified based on the correlation. For example, when sensor points in the live sensor data 402 and high likelihood regions of the estimated sensor point cloud distribution 450 coincide, the estimated PDF or estimated sensor point cloud distribution 450 may be modified based on the identified correlation, e.g., by further increasing the likelihood of the high likelihood region corresponding to a sensor point in the live sensor data 402 and/or increasing a confidence level associated with the high likelihood region corresponding to a sensor point in the live sensor data 402. Similarly, when sensor points in the live sensor data 402 and low likelihood regions of the estimated sensor point cloud distribution 450 coincide, the estimated PDF or estimated sensor point cloud distribution 450 may be modified based on the lack of an identified correlation, e.g., by increasing the likelihood of the low likelihood region corresponding to a sensor point in the live sensor data 402 and/or decreasing a confidence level associated with the low likelihood region corresponding to a sensor point in the live sensor data 402. Additionally, when no sensor points in the live sensor data 402 coincide with high likelihood regions of the estimated sensor point cloud distribution 450, the estimated PDF or estimated sensor point cloud distribution 450 may be modified based on the lack of an identified correlation, e.g., by decreasing the likelihood of the high likelihood region lacking any coinciding sensor points in the live sensor data 402 and/or decreasing a confidence level associated with the high likelihood region lacking any coinciding sensor points in the live sensor data 402. Notably, although "live" imagery and "live" sensor data are referred to herein for clarity and convenience, previously recorded imagery, and optionally previously recorded sensor data corresponding to that recorded imagery, can be used in place of "live" imagery and data in various methods disclosed herein to generate estimated PDFs and/or estimated sensor point cloud distributions for the recorded imagery and data.

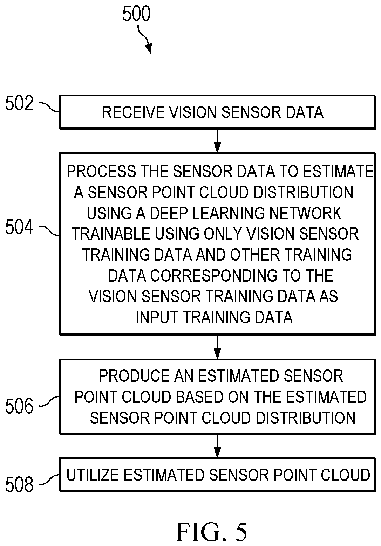

FIG. 5 illustrates a method 500 of producing and using an estimated sensor point cloud distribution based on vision sensor data in accordance with some embodiments. As shown in FIG. 5, the method 500 includes, at block 502, receiving vision sensor data, such as the photographic image 200 of FIG. 2. At block 504, the method 500 includes processing the vision sensor data to estimate a sensor point cloud distribution, such as point cloud PDFs or other parameters, where the processing is performed using a deep learning network trainable using only vision sensor training data and other training data corresponding to the vision sensor training data as input training data, such as a deep learning network trained using the method 100 of FIG. 1. At block 506, the method 500 includes producing an estimated sensor point cloud distribution based on the estimated sensor point cloud distribution similar to the estimated sensor point cloud distribution 450 of FIG. 4. At block 508, the method 500 includes utilizing the estimated sensor point cloud distribution.

The estimated sensor point cloud distribution can be used as the basis for any of a number of applications, ranging from notifying an occupant of a vehicle of an approaching object or a turn identified in the estimated sensor point cloud distribution to directly controlling a vehicle, e.g., applying brakes or acceleration to avoid colliding with an approaching object or automatedly turning, e.g., via the steering wheel, when an upcoming turn is identified. As discussed above in connection with FIG. 4, in some embodiments, the estimated sensor point cloud distribution is used to improve live sensor data. In other embodiments, an estimated PDF or estimated sensor point cloud distribution is modified based on live sensor data to produce an improved estimated sensor point cloud distribution. In some embodiments, the estimated PDF or estimated sensor point cloud distribution is used to increase the granularity and/or dimensionality of live sensor data, e.g., by adding sensor points and/or converting 2D (or 3D) live sensor data to 3D (or 4D) live sensor data. In some embodiments, the estimated PDF or estimated sensor point cloud distribution is used, along with corresponding vision sensor data, as training data for other machine learning applications. Thus, methods disclosed herein are not only usable for producing sensor data from vision sensor data for the purposes of utilizing that sensor data in a live or "real-time" application, but also for producing vast quantities of sensor data for vision sensor data in order to enable further deep learning applications that may require such quantities of corresponding sensor data and vision sensor data.

Techniques for using machine learning to produce sensor data from vision sensor data are disclosed. By using a limited amount of sensor data together with vision sensor data, a deep learning network can be trained to produce estimated sensor point cloud distributions from, e.g., vision sensor data alone. Using a deep learning network trained in this way, vehicles with limited or no other sensor functionality can be equipped with a camera to produce estimated sensor point cloud distributions. The estimated sensor point cloud distributions can then be used to improve vehicle safety through vehicle controls or driver notifications and/or to produce enhanced sensor data.

In some embodiments, certain aspects of the techniques described above may be implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

Aspects of the disclosure are defined in the accompanying claims. In a first aspect, there is provided a method comprising: receiving vision sensor data; processing the vision sensor data to estimate a sensor point cloud distribution, wherein the processing is performed using a deep learning network trainable using only vision sensor training data and other training data corresponding to the vision sensor training data as input training data; and producing an estimated sensor point cloud based on the estimated sensor point cloud distribution. In some embodiments, the vision sensor data includes one or more camera images. In some embodiments, the sensor point cloud distribution is a radar point cloud distribution including one or more of: range, azimuth, elevation, and Doppler information. In some embodiments, the other training data includes radar points having range and azimuth information, and the estimated sensor point cloud distribution includes estimated radar points having range, azimuth, elevation, and Doppler information. In some embodiments, the vision sensor data is the vision sensor training data, the method further comprising comparing the estimated sensor point cloud distribution with the other training data corresponding to the vision sensor training data to obtain a loss function; and updating the deep learning network based on the loss function.

In some embodiments, the loss function maximizes a posteriori probability of the other training data to the estimated sensor point cloud distribution. In some embodiments, the other training data includes point clouds at a first resolution, and the estimated sensor point cloud distribution has a second resolution higher than the first resolution. In some embodiments, the method further comprising generating a sensor point cloud from the estimated sensor point cloud distribution as a realization with likelihood values that exceed a threshold.

In some embodiments, the vision sensor data is the vision sensor training data, the method further comprising: comparing the estimated sensor point cloud distribution with the other training data corresponding to the vision sensor training data to obtain a loss function; generating a sensor point cloud from the estimated sensor point cloud distribution as a realization; and comparing likelihood values in the sensor point cloud with a predetermined threshold to determine whether training of the deep learning network is complete. In some embodiments, the estimated sensor point cloud distribution comprises Gaussian mixture model parameters. In some embodiments, the method further comprises receiving sensor data corresponding to the vision sensor data; and modifying the estimated sensor point cloud distribution based on the sensor data. In some embodiments, the modifying further includes determining a correlation between the sensor data and the estimated sensor point cloud distribution; and modifying the estimated sensor point cloud distribution based on the correlation.

In some embodiments, the method further comprises controlling a vehicle based on the estimated sensor point cloud distribution. In some embodiments, the method further comprises providing a notification to an occupant of a vehicle based on the estimated sensor point cloud distribution.

In a second aspect, there is provided a non-transitory computer readable medium embodying a set of executable instructions, the set of executable instructions to manipulate at least one processor to: receive vision sensor data; process the vision sensor data to estimate a sensor point cloud distribution, wherein the processing is performed using a deep learning network trainable using only vision sensor training data and other training data corresponding to the vision sensor training data as input training data; and produce an estimated sensor point cloud distribution based on the estimated sensor point cloud distribution.

In some embodiments, the vision sensor data is the vision sensor training data and the set of executable instructions further manipulate the at least one processor to: compare the estimated sensor point cloud distribution with the other training data corresponding to the vision sensor training data to obtain a loss function; and update the deep learning network based on the loss function.

In some embodiments, the vision sensor data is the vision sensor training data and the set of executable instructions further manipulate the at least one processor to: compare the estimated sensor point cloud distribution with the other training data corresponding to the vision sensor training data to obtain a loss function; generate a sensor point cloud from the estimated sensor point cloud distribution as a realization; and compare likelihood values in the sensor point cloud with a predetermined threshold to determine whether training of the deep learning network is complete.

In a third aspect, there is provide a device containing a processor configured to:
receive vision sensor data; process the vision sensor data to estimate a sensor point cloud distribution, wherein the processing is performed using a deep learning network trainable using only vision sensor training data and other training data corresponding to the vision sensor training data as input training data; and produce an estimated sensor point cloud distribution based on the estimated sensor point cloud distribution.

In some embodiments, the vision sensor data is the vision sensor training data and the processor is further configured to: compare the estimated sensor point cloud distribution with the other training data corresponding to the vision sensor training data to obtain a loss function; and update the deep learning network based on the loss function.

In some embodiments, the vision sensor data is the vision sensor training data and the processor is further configured to: compare the estimated sensor point cloud distribution with the other training data corresponding to the vision sensor training data to obtain a loss function; generate a sensor point cloud from the estimated sensor point cloud distribution as a realization; and compare likelihood values in the sensor point cloud with a predetermined threshold to determine whether training of the deep learning network is complete.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disk, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed is not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

**Claims**

1. A method comprising:

   receiving vision sensor data;
   processing the vision sensor data to estimate a sensor point cloud distribution,
   wherein the processing is performed using a deep learning network trainable using only vision sensor training data and other training data corresponding to the vision sensor training data as input training data; and
   producing an estimated sensor point cloud based on the estimated sensor point cloud distribution.

2. The method of claim 1, wherein the vision sensor data includes one or more camera images.

3. The method of claim 1 or 2, wherein the sensor point cloud distribution is a radar point cloud distribution including one or more of: range, azimuth, elevation, and Doppler information.

4. The method of claim 3, wherein the other training data includes radar points having range and azimuth information, and the estimated sensor point cloud distribution includes estimated radar points having range, azimuth, elevation, and Doppler information.

5. The method of any preceding claim, wherein the vision sensor data is the vision sensor training data, the method further comprising:

   comparing the estimated sensor point cloud distribution with the other training data corresponding to the vision sensor training data to obtain a loss function; and
   updating the deep learning network based on the loss function.

6. The method of claim 5, wherein the loss function maximizes a posteriori probability of the other training data to the estimated sensor point cloud distribution.

7. The method of any preceding claim, wherein the other training data includes point clouds at a first resolution, and the estimated sensor point cloud distribution has a second resolution higher than the first resolution.

8. The method of any preceding claim, further comprising generating a sensor point cloud from the estimated sensor point cloud distribution as a realization with likelihood values that exceed a threshold.

9. The method of any preceding claim, wherein the vision sensor data is the vision sensor training data, the method further comprising:

comparing the estimated sensor point cloud distribution with the other training data corresponding to the vision sensor training data to obtain a loss function;
generating a sensor point cloud from the estimated sensor point cloud distribution as a realization; and
comparing likelihood values in the sensor point cloud with a predetermined threshold to determine whether training of the deep learning network is complete.

10. The method of any preceding claim, wherein the estimated sensor point cloud distribution comprises Gaussian mixture model parameters.

11. The method of any preceding claim, further comprising:

receiving sensor data corresponding to the vision sensor data; and
modifying the estimated sensor point cloud distribution based on the sensor data.

12. The method of claim 11, wherein the modifying further includes:

determining a correlation between the sensor data and the estimated sensor point cloud distribution; and
modifying the estimated sensor point cloud distribution based on the correlation.

13. The method of any preceding claim, further comprising at least one of controlling a vehicle based on the estimated sensor point cloud distribution and providing a notification to an occupant of a vehicle based on the estimated sensor point cloud distribution.

14. A non-transitory computer readable medium embodying a set of executable instructions, the set of executable instructions to manipulate at least one processor to:

receive vision sensor data;
process the vision sensor data to estimate a sensor point cloud distribution,
wherein the processing is performed using a deep learning network trainable using only vision sensor training data and other training data corresponding to the vision sensor training data as input training data; and
produce an estimated sensor point cloud distribution based on the estimated sensor point cloud distribution.

15. A device containing a processor configured to:

receive vision sensor data;
process the vision sensor data to estimate a sensor point cloud distribution,
wherein the processing is performed using a deep learning network trainable using only vision sensor training data and other training data corresponding to the vision sensor training data as input training data; and
produce an estimated sensor point cloud distribution based on the estimated sensor point cloud distribution.

FIG. 1

FIG. 2

300

302 — LIVE IMAGERY

104 — CNN MODEL

306 — PDF MODEL PARAMETERS

108 — ESTIMATE PDF

90°

60°

350

30°

0.0

0°

0.2

0.4

0.6

-30°

0.8

-60°

1.0

-90°

HIGH LIKELIHOOD

LOW LIKELIHOOD

FIG. 3

400

FIG. 4

500

502 — RECEIVE VISION SENSOR DATA

504 — PROCESS THE SENSOR DATA TO ESTIMATE A SENSOR POINT CLOUD DISTRIBUTION USING A DEEP LEARNING NETWORK TRAINABLE USING ONLY VISION SENSOR TRAINING DATA AND OTHER TRAINING DATA CORRESPONDING TO THE VISION SENSOR TRAINING DATA AS INPUT TRAINING DATA

506 — PRODUCE AN ESTIMATED SENSOR POINT CLOUD BASED ON THE ESTIMATED SENSOR POINT CLOUD DISTRIBUTION

508 — UTILIZE ESTIMATED SENSOR POINT CLOUD

FIG. 5

Europäisches
Patentamt

European
Patent Office

Office européen
des brevets

# EUROPEAN SEARCH REPORT

Application Number

EP 24 19 4289

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/083792 A1 (NASEER TAYYAB [GB] ET AL) 17 March 2022 (2022-03-17) <br> * paragraphs [0006], [0012], [0015], [0017], [0018], [0024], [0030], [0032], [0036] * <br> * paragraphs [0041] - [0044], [0046] - [0050], [0057], [0059] - [0061], [0067] - [0076]; claim 12; figures 1-3 * <br> - - - - - | 1-15 | INV. <br> G01S7/41 <br> G01S7/48 <br> G01S13/86 <br> G01S13/931 <br> G06V20/58 |
| X | US 2021/063578 A1 (WEKEL TILMAN [US] ET AL) 4 March 2021 (2021-03-04) <br> * paragraphs [0023] - [0031], [0049], [0061] - [0066]; figures 1,3 * <br> - - - - - | 1-9, 11-15 | |

TECHNICAL FIELDS
SEARCHED     (IPC)

G01S
G06V

The present search report has been drawn up for all claims

| Place of search | Date of completion of the search | Examiner |
|---|---|---|
| Munich | 16 November 2024 | Schmelz, Christian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 19 4289

16-11-2024

| Patent document cited in search report | Publication date | Patent family member(s) | | Publication date |
|---|---|---|---|---|
| US 2022083792 A1 | 17-03-2022 | CN | 114199223 A | 18-03-2022 |
| | | DE | 102020211636 A1 | 17-03-2022 |
| | | US | 2022083792 A1 | 17-03-2022 |
| US 2021063578 A1 | 04-03-2021 | US | 2021063578 A1 | 04-03-2021 |
| | | US | 2024111025 A1 | 04-04-2024 |
| | | WO | 2021041854 A1 | 04-03-2021 |

EPO FORM P0459